(19) Europäisches Patentamt / European Patent Office / Office européen des brevets

(11) **EP 4 576 649 A1**

(12) **DEMANDE DE BREVET EUROPEEN**

(43) Date de publication:
**25.06.2025 Bulletin 2025/26**

(21) Numéro de dépôt: **24220270.3**

(22) Date de dépôt: **16.12.2024**

(51) Classification Internationale des Brevets (IPC):
*H04L 9/00* (2022.01)    *H04L 9/06* (2006.01)
*H04L 9/08* (2006.01)    *H04L 9/14* (2006.01)

(52) Classification Coopérative des Brevets (CPC):
**H04L 9/008; H04L 9/065; H04L 9/0897; H04L 9/14;**
H04L 2209/046

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **18.12.2023 FR 2314410**

(71) Demandeur: **Commissariat à l'Energie Atomique et aux Energies Alternatives
75015 Paris (FR)**

(72) Inventeurs:
• **BOUDGUIGA, Aymen**
**91191 GIF SUR YVETTE CEDEX (FR)**
• **SIRDEY, Renaud**
**91191 GIF SUR YVETTE CEDEX (FR)**
• **STAN, Oana**
**91191 GIF-SUR-YVETTE CEDEX (FR)**
• **ZUBER, Martin**
**91191 GIF-SUR-YVETTE CEDEX (FR)**

(74) Mandataire: **Lavoix
2, place d'Estienne d'Orves
75441 Paris Cedex 09 (FR)**

(54) **SERVEUR INFORMATIQUE, SYSTÈME CLIENT-SERVEUR ET PROCÉDÉ D'ÉCHANGES DE DONNÉES EN DOUBLE AVEUGLE POUR CONFIDENTIALITÉ DES DONNÉES ET INTÉGRITÉ DES OPÉRATIONS**

(57)    Ce serveur informatique (12) comprend :
- une base (20) de fichiers informatiques ;
- un module de gestion (22) pour recevoir une requête ([ReqF]) contenant un premier identifiant d'un équipement client (14) et un deuxième identifiant d'un fichier (F) de la base (20), le deuxième identifiant inclus dans la requête ([ReqF]) ayant été chiffré via un algorithme de chiffrement homomorphe ; puis pour appliquer une opération homomorphe à la requête pour délivrer un chiffré ([F]) du fichier ; et
- un module de masquage (24) pour recevoir le chiffré ([F]) du fichier ; pour générer un masque (M) ; pour délivrer un chiffré ([F+M]) d'une combinaison du fichier (F) et du masque ; et pour transmettre le masque à une enclave client sécurisée (34) incluse dans l'équipement client (14), l'enclave étant adaptée pour recevoir la combinaison (F+M) du fichier et du masque, puis pour retirer le masque pour la mise en oeuvre du fichier.

FIG.1

EP 4 576 649 A1

**Description**

La présente invention concerne un serveur informatique comprenant une base de fichiers informatiques et un module de gestion configuré pour recevoir une requête contenant un premier identifiant d'un équipement client et un deuxième identifiant d'un fichier parmi les fichiers de la base, le deuxième identifiant inclus dans la requête ayant été chiffré via un algorithme de chiffrement homomorphe et une clé de chiffrement.

Le module de gestion est alors configuré pour appliquer une opération homomorphe à la requête pour délivrer un chiffré du fichier correspondant au deuxième identifiant, le chiffré du fichier étant selon l'algorithme de chiffrement homomorphe et la clé de chiffrement.

L'invention a également pour objet un système client-serveur comprenant un équipement client et un tel serveur informatique reliés entre eux.

L'invention a également pour objet un procédé d'échange de données entre un serveur informatique et un équipement client.

L'invention concerne le domaine de la protection de la confidentialité des données.

L'invention concerne notamment le domaine des chiffrements homomorphes, autrement appelé la cryptographie homomorphe. Un chiffrement homomorphe comprend un couple de clé, une clé de chiffrement ou clé publique et une clé de déchiffrement ou clé privée. Le chiffrement homomorphe permet l'exécution de calcul sur des données chiffrées avec la clé de chiffrement et l'obtention d'un résultat déchiffrable via la clé de déchiffrement.

De telles méthodes de chiffrement sont utilisées par exemple par un équipement client souhaitant exécuter une fonction, dont le code est confidentiel, comprise dans un serveur informatique, ceci sur des données elles aussi confidentielles. Ainsi, le serveur informatique n'a aucune connaissance des données fournies, et l'équipement client ne peut pas récupérer le code de la fonction utilisée.

Néanmoins, le chiffrement homomorphe augmente le temps de calcul.

Un autre champ de recherche porte sur l'utilisation d'enclave sécurisée, aussi appelée environnement d'exécution sécurisé, ou TEE (de l'anglais *Trusted Execution Environment).*

L'article « Toward Scalable Fully Homomorphic Encryption Through Light Trusted Computing Assistance » de W. Wang et al décrit une méthode hybride, appelée TEE-FHE (de l'anglais *Trusted Execution Environment - Fully Homomorphic Encryption*), utilisant à la fois un chiffrement total homomorphe et une enclave sécurisée afin d'améliorer les performances de calcul. L'enclave permet d'effectuer des opérations de manière sécurisée, notamment l'amorçage (de l'anglais *bootstrapping).*

Toutefois, un tel système ne donne pas entière satisfaction.

Le but de l'invention est alors de proposer un serveur informatique permettant d'améliorer la confidentialité d'échanges de données avec un équipement client, tout en conservant de bonnes performances de calcul.

A cet effet, l'invention a pour objet un serveur informatique comprenant :

- une base de fichiers informatiques ;
- un module de gestion configuré pour recevoir une requête contenant un premier identifiant d'un équipement client et un deuxième identifiant d'un fichier parmi les fichiers de la base, le deuxième identifiant inclus dans la requête ayant été chiffré via un algorithme de chiffrement homomorphe et une clé de chiffrement ; le module de gestion étant alors configuré pour appliquer une opération homomorphe à la requête pour délivrer un chiffré du fichier correspondant au deuxième identifiant, le chiffré du fichier étant selon l'algorithme de chiffrement homomorphe et la clé de chiffrement ;
- un module de masquage connecté en sortie du module de gestion, le module de masquage étant configuré pour recevoir le chiffré du fichier, pour générer un masque et pour délivrer un chiffré d'une combinaison du fichier et du masque ;

le module de masquage étant configuré en outre pour transmettre le masque à une enclave client sécurisée incluse dans l'équipement client correspondant au premier identifiant, l'enclave client sécurisée étant alors adaptée pour recevoir la combinaison du fichier et du masque, puis pour retirer le masque pour la mise en oeuvre du fichier au sein de l'enclave client sécurisée.

Le chiffrement de la requête du client via l'algorithme de chiffrement homomorphe permet à l'équipement client de demander l'utilisation d'un fichier de la base du serveur sans que le serveur n'ait connaissance du fichier demandé.

Dans la présente invention, le traitement chiffré ou en homomorphe de la requête fait référence à un traitement en homomorphe utilisant le deuxième identifiant chiffré.

En outre, l'exécution du fichier dans l'enclave client sécurisée permet de déléguer l'exécution du fichier habituellement lente en chiffrement homomorphe à l'équipement client qui l'exécutera en clair, c'est-à-dire sur les données non-chiffrées, dans l'enclave sécurisée assurant ainsi la confidentialité de la fonction du serveur, tout en offrant de bonnes performances de calcul. Le module de gestion traite alors uniquement la requête chiffrée ce qui améliore les performances du serveur informatique.

Enfin, l'ajout du masque permet de protéger le fichier d'un équipement client « curieux », ce masque étant retiré dans l'enclave sécurisée, c'est-à-dire seulement à l'intérieur de l'enclave sécurisée.

Suivant d'autres aspects avantageux de l'invention, le serveur informatique comprend une ou plusieurs des caractéristiques suivantes, prises isolément ou suivant toutes les combinaisons techniquement possibles :

- la requête chiffrée est reçue d'un module de chiffrement inclus dans l'équipement client, le module de chiffrement étant configuré pour chiffrer le deuxième identifiant inclus dans la requête via l'algorithme de chiffrement homomorphe et la clé de chiffrement ;
- le serveur informatique comprend en outre une enclave serveur sécurisée, l'enclave serveur sécurisée comprenant une unité de chiffrement, l'unité de chiffrement étant configurée pour recevoir la requête d'un module de transmission inclus dans l'équipement client, pour chiffrer le deuxième identifiant inclus dans la requête via l'algorithme de chiffrement homomorphe et la clé de chiffrement, et pour fournir au module de gestion la requête chiffrée ;
- le module de masquage est configuré pour transmettre le chiffré de la combinaison du fichier et du masque à un module de déchiffrement inclus dans l'équipement client, le module de déchiffrement étant configuré pour déchiffrer le chiffré de la combinaison du fichier et du masque via un algorithme de déchiffrement et une clé de déchiffrement et pour transmettre la combinaison déchiffrée du fichier et du masque à l'enclave client sécurisée ;
- le serveur informatique comprend en outre une enclave serveur sécurisée, l'enclave serveur sécurisée comprenant une unité de déchiffrement, l'unité de déchiffrement étant configurée pour déchiffrer le chiffré de la combinaison du fichier et du masque via un algorithme de déchiffrement et une clé de déchiffrement et pour transmettre la combinaison déchiffrée du fichier et du masque à l'enclave client sécurisée ;
- la ou chaque enclave sécurisée est choisie parmi le groupe consistant en : une enclave ARM@ TrustZone® et une enclave Intel® Software Guard Extensions ;
- le masque est généré aléatoirement ou pseudo- aléatoirement et est à usage unique ;
  le masque étant de préférence généré via une méthode de masque jetable ou via une fonction pseudo-aléatoire ;
- l'algorithme de chiffrement homomorphe est un algorithme de chiffrement homomorphe additif ;
- le deuxième identifiant de la requête chiffrée est un vecteur de chiffrés, la taille du vecteur étant égale au nombre de fichiers informatiques de la base ; et
- l'opération homomorphe appliquée à la requête chiffrée est un produit scalaire.

L'invention concerne également un système client-serveur comprenant un équipement client et un serveur informatique reliés entre eux, le serveur informatique étant tel que défini ci-dessus.

Suivant un autre aspect avantageux de l'invention, le système client-serveur comprend au moins un canal sécurisé configuré pour transmettre une information entre l'équipement client et le serveur informatique.

L'invention concerne également un procédé d'échange de données entre un serveur informatique et un équipement client, le serveur informatique comprenant une base de fichiers informatiques, le procédé comprenant les étapes suivantes :

- chiffrement homomorphe d'une requête via un algorithme de chiffrement homomorphe et une clé de chiffrement, la requête contenant un premier identifiant de l'équipement client et un deuxième identifiant d'un fichier parmi les fichiers de la base, seul le deuxième identifiant étant chiffré ;
- application d'une opération homomorphe à la requête chiffrée pour délivrer un chiffré du fichier correspondant au deuxième identifiant ;
- génération d'un masque et ajout du masque au chiffré du fichier pour former un chiffré d'une combinaison du fichier et du masque ;
- déchiffrement du chiffré de la combinaison du fichier et du masque via un algorithme de déchiffrement et une clé de déchiffrement ;
- retrait du masque à la combinaison déchiffrée du fichier et du masque dans une enclave client sécurisée incluse dans l'équipement client correspondant au premier identifiant ;
- mise en oeuvre du fichier dans l'enclave client sécurisée.

L'invention apparaîtra plus clairement à la lecture de la description qui va suivre, donnée uniquement à titre d'exemple non limitatif, et faite en référence aux dessins dans lesquels :

- la figure 1 est une représentation schématique d'un premier mode de réalisation d'un système client-serveur selon l'invention ;
- la figure 2 est une représentation schématique d'un deuxième mode de réalisation du système client-serveur selon l'invention ;
- la figure 3 est une représentation schématique d'un troisième mode de réalisation du système client-serveur selon l'invention ;

- la figure 4 est une représentation schématique d'un quatrième mode de réalisation du système client-serveur selon l'invention ; et

- la figure 5 est un organigramme d'un procédé d'échange de données au sein du système client-serveur selon l'invention.

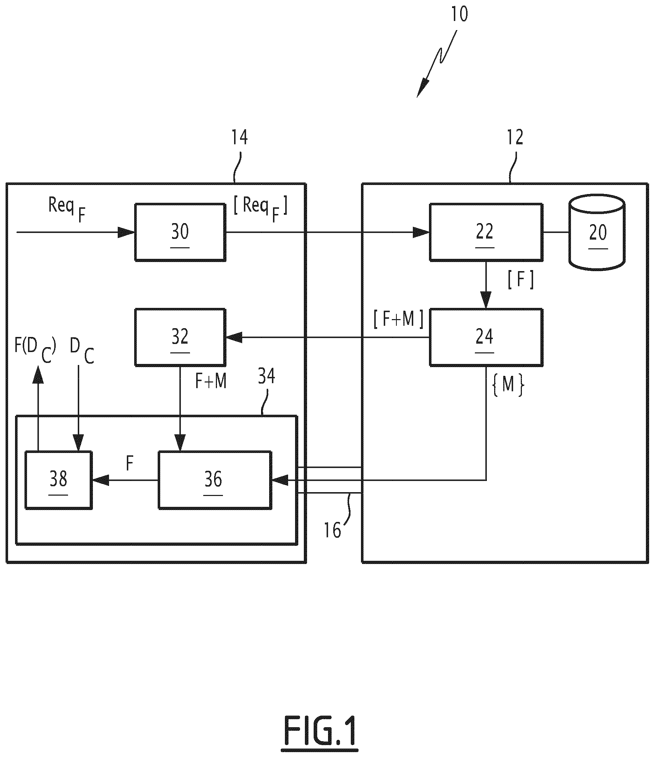

Sur la figure 1, un système client-serveur 10 comprend un serveur informatique 12 et un équipement client 14 reliés entre eux, par exemple de manière sans fil via une liaison radioélectrique de données, ou encore de manière filaire.

Le système client-serveur 10 selon l'invention a pour but de permettre à l'équipement client 14 de récupérer un fichier F sur le serveur informatique 12 sans divulguer le fichier F choisi, et tout en assurant au serveur informatique 12 que l'équipement client 14 n'a aucun accès au fichier F, par exemple au binaire du fichier F, ainsi que cela va être expliqué par la suite.

Optionnellement, le système client-serveur 10 comprend en outre un canal sécurisé 16 entre le serveur informatique 12 et l'équipement client 14. Le canal sécurisé 16 est configuré pour transmettre de manière sécurisée une information entre l'équipement client 14 et le serveur informatique 12, c'est-à-dire depuis l'équipement client 14 vers le serveur informatique 12 ou depuis le serveur informatique 12 vers l'équipement client 14. L'information peut alors être transmise en clair, c'est-à-dire de manière non-chiffrée à l'intérieur du canal sécurisé 16, la sécurisation de l'information étant effectuée par le canal sécurisé 16 lui-même. Le canal sécurisé 16 est par exemple un canal de sécurité de la couche de transport ou canal TLS (de l'anglais *Transport Layer Security*).

Le serveur informatique 12 comprend une base 20 de fichiers informatiques, un module de gestion 22 et un module de masquage 24. La base 20 est reliée au module de gestion 22.

Par exemple, la base 20 comprend une pluralité de fichiers informatiques stockés en clair.

En particulier, la base 20 de fichiers informatiques comprend un binaire exécutable de chaque fichier informatique.

On entend ici et dans la suite de la description par « en clair », une information, telle qu'une donnée ou un fichier, non-chiffrée, autrement dit l'information est lisible sans avoir besoin d'effectuer d'opération de déchiffrement sur ladite information.

De préférence, les fichiers sont rangés selon un vecteur $V_{base}$ de longueur $N_{base}$ égale au nombre de fichiers informatiques contenus dans la base 20, chaque composante du vecteur $V_{base}$ correspondant à un fichier informatique.

Les fichiers informatiques sont typiquement des programmes, des fonctions logicielles, des paramètres de fonction, ou encore des applications logicielles. Les fichiers informatiques sont par exemple des codes de jeux vidéo en ligne, ou des algorithmes d'intelligence artificielle déjà entraînés, notamment des réseaux de neurones, des paramètres de réseaux de neurones, tels que poids synaptiques et/ou biais. Chaque fichier informatique est stocké dans la base 20 sous forme d'un binaire, tel que décrit ci-dessus, ou encore sous forme d'un fichier textuel, comportant alors par exemple un code source de la fonction ou application logicielle, ou encore les valeurs des paramètres de fonction.

Le serveur informatique 12 est par exemple formé d'une mémoire (non représentée) et d'un processeur (non représenté) associé à la mémoire.

Le module de gestion 22 et le module de masquage 24 sont réalisés chacun sous forme d'un ou plusieurs logiciels, ou d'une brique logicielle, exécutables par le processeur. La mémoire du serveur informatique 12 est alors apte à stocker un logiciel de gestion et un logiciel de masquage. Le processeur du serveur informatique 12 est alors apte à exécuter le logiciel de gestion et le logiciel de masquage.

Le module de gestion 22 et le module de masquage 24 sont en outre aptes à être enregistrés sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module de gestion 22 est configuré pour recevoir une requête [Req$_F$] contenant un premier identifiant de l'équipement client 14 et un deuxième identifiant d'un fichier F parmi les fichiers de la base 20, le deuxième identifiant inclus dans la requête [Req$_F$] ayant été chiffré via un algorithme de chiffrement homomorphe et une clé de chiffrement.

L'homme du métier comprendra que dans la requête chiffrée [Req$_F$], seul le deuxième identifiant est chiffré, le premier identifiant étant en clair dans ladite requête, ceci quel que soit le mode de réalisation, notamment pour chacun des premier, deuxième, troisième et quatrième modes de réalisation décrits ci-après. Le fait d'avoir le premier identifiant en clair dans ladite requête chiffrée [Req$_F$] permet au serveur informatique 12 recevant ladite requête de connaître le premier identifiant de l'équipement client 14 lui ayant transmis ladite requête, pour pouvoir ensuite lui répondre en retour.

Par exemple, l'algorithme de chiffrement homomorphe est un algorithme de chiffrement homomorphe additif.

Par exemple l'algorithme de chiffrement homomorphe est un algorithme de chiffrement totalement homomorphe, également appelé algorithme FHE (de l'anglais *Fully Homomorphic Encryption*).

A cet effet, l'équipement client 14 à l'origine de la requête Req$_F$ connait la position du fichier F souhaité dans la base 20. Par exemple, l'équipement client 14 connait la position du fichier F dans le vecteur V$_{base}$ parmi l'ensemble des fichiers de la base 20.

Selon un exemple de réalisation, le deuxième identifiant de la requête chiffrée [Req$_F$] est un vecteur V$_{req}$ de chiffrés, chaque chiffré ayant été chiffré selon l'algorithme de chiffrement homomorphe et la clé de chiffrement. La taille du vecteur V$_{req}$ de chiffré est égale au nombre N de fichiers informatique dans la base 20, ou à la longueur du vecteur V$_{base}$. Ainsi, seulement la composante du vecteur V$_{req}$ de chiffrés correspondant au fichier F est équivalente à un 1 logique, c'est-à-dire que le vecteur V$_{req}$ de chiffrés est configuré pour qu'uniquement le fichier F soit sélectionné parmi les fichier du vecteur V$_{base}$.

Le module de gestion 22 est alors configuré en outre pour appliquer une opération homomorphe à la requête [Req$_F$] pour délivrer un chiffré [F] du fichier F correspondant au deuxième identifiant, le chiffré [F] du fichier F étant selon l'algorithme de chiffrement homomorphe et la clé de chiffrement.

En d'autres termes, le module de gestion 22 est alors configuré pour fournir en sortie un chiffré [F] du fichier F, correspondant au fichier F ayant été chiffré via l'algorithme de chiffrement homomorphe et la clé de chiffrement, l'algorithme de chiffrement homomorphe et la clé de chiffrement étant identiques à ceux utilisés pour le chiffrement de la requête Req$_F$.

L'opération homomorphe permet par exemple d'effectuer une recherche d'informations privées PIR (de l'anglais *Private Information Retrieval*). Autrement dit, l'opération homomorphe permet de révéler un fichier F de la base 20, sans indiquer au serveur informatique 12 quel fichier F a été révélé. L'homme du métier observera en outre que le fichier ainsi obtenu n'est pas davantage révélé, car ce n'est pas le fichier F lui-même qui est obtenu, mais le chiffré [F] du fichier F.

Par exemple, lorsque l'opération homomorphe est de type PIR, si la requête chiffrée [Req$_F$] est un vecteur V$_{req}$ de chiffrés tel que décrit ci-dessus et la base 20 comprend un vecteur V$_{base}$ de fichiers informatiques en clair, le module de gestion 22 est configuré pour effectuer le produit scalaire du vecteur V$_{req}$ par le vecteur V$_{base}$. Le résultat du produit scalaire correspond alors au chiffré [F] du fichier F requis par le deuxième identifiant selon l'équation suivante :

[1]

$$[F] = V_{req} \cdot V_{base}$$

Le module de masquage 24 est configuré pour recevoir le chiffré [F] du fichier F fourni en sortie du module de gestion 22.

Le module de masquage 24 est ensuite configuré pour générer un masque M ; puis pour délivrer un chiffré [F+M] d'une combinaison du fichier F et du masque M. Autrement dit, le module de masquage 24 est configuré pour ajouter le masque M au chiffré [F].

Le masque M est généré aléatoirement ou pseudo-aléatoirement.

Le masque M est de même longueur que le chiffré [F]. Par exemple, si le fichier chiffré [F] est codé en un nombre N$_{bit}$ de bits, le masque M comprend N$_{bit}$ valeurs, chaque valeur du masque M sert à masquer une valeur du fichier F.

De préférence, le masque M est à usage unique, c'est-à-dire qu'un nouveau masque M est généré pour chaque requête Req$_F$.

Le masque M correspond typiquement à un chiffrement supplémentaire indéchiffrable par l'équipement client 14 s'il n'a pas connaissance de la clé.

Par exemple, le masque M est réalisé par la méthode du masque jetable (ou *one time pad* en anglais). Dans le cas d'un codage du chiffré [F] en bits, le masque M est une suite de bits, de même longueur que le chiffré [F]. La combinaison F+M du fichier F et du masque M correspond, selon cet exemple, au résultat de l'opération XOR entre chaque bit du fichier F et du masque M.

En variante, le masque M est formé de N$_{bit}$ valeurs aléatoires ou pseudo-aléatoire, et la combinaison F+M correspond alors au résultat de l'addition entre chaque valeur du fichier F et du masque M. Par exemple, les valeurs du masque M sont obtenues via une fonction pseudo aléatoire, ou PRF (de l'anglais *Pseudo Random Function*).

Le module de masquage 24 est donc configuré pour effectuer l'addition du masque M au chiffré [F] du fichier F ; puis pour fournir en sortie un chiffré [F+M] de la combinaison du fichier F et du masque M, le chiffré [F+M] correspondant à la combinaison F+M du fichier F et du masque M, chiffrée via l'algorithme de chiffrement et la clé de chiffrement. L'algorithme de chiffrement et la clé de chiffrement sont identiques à ceux utilisés pour le chiffrement du deuxième identifiant inclus dans la requête Req$_F$.

L'équipement client 14 est par exemple formé d'une mémoire (non représentée) et d'un processeur (non représenté) associé à la mémoire.

Selon un premier mode de réalisation, illustré sur la figure 1, l'équipement client 14 comprend un module de chiffrement 30, un module de déchiffrement 32 et une enclave client sécurisée 34.

Le module de chiffrement 30 et le module de déchiffrement 32 sont réalisés sous forme d'un ou plusieurs logiciels, ou d'une brique logicielle, exécutables par le processeur. La mémoire de l'équipement client 14 est alors apte à stocker un logiciel de chiffrement et un logiciel de déchiffrement. Le processeur de l'équipement client 14 est alors apte à exécuter le logiciel de chiffrement et le logiciel de déchiffrement.

Le module de chiffrement 30 et le module de déchiffrement 32 sont en outre aptes à être enregistrés sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module de chiffrement 30 est configuré pour chiffrer le deuxième identifiant inclus dans la requête $Req_F$ via l'algorithme de chiffrement homomorphe et la clé de chiffrement.

Le déchiffrement de l'algorithme de chiffrement est exécutable uniquement via un algorithme de déchiffrement et une clé de déchiffrement, aussi appelée clé privée, connue uniquement de l'équipement client 14.

De préférence, le chiffrement est asymétrique, c'est-à-dire que la clé de déchiffrement diffère de la clé de chiffrement.

Le module de chiffrement 30 est alors configuré pour prendre en entrée la requête $Req_F$ en clair ; puis pour fournir en sortie la requête chiffrée $[Req_F]$ au module de gestion 22.

Ainsi, le serveur informatique 12 reçoit uniquement la requête chiffrée $[Req_F]$ et ne peut pas déterminer la requête $Req_F$ en clair, car ce dernier ne connaît pas la clé de déchiffrement. Autrement dit, le serveur informatique 12 ne peut pas déterminer le fichier F requis par l'équipement client 14. Le chiffrement de la requête $Req_F$ assure la confidentialité pour l'équipement client 14 du deuxième identifiant inclus dans sa requête $Req_F$, et en particulier de l'identité du fichier F requis.

Le module de déchiffrement 32 est configuré pour recevoir le chiffré $[F+M]$ de la combinaison du fichier F et du masque M, fourni par le module de masquage 24. Le module de masquage 24 identifie l'équipement client 14 auquel transmettre la combinaison chiffrée $[F+M]$ via le premier identifiant de la requête $[Req_F]$.

Le module de déchiffrement 32 est en outre configuré pour déchiffrer le chiffré $[F+M]$ de la combinaison du fichier F et du masque M via l'algorithme de déchiffrement et la clé de déchiffrement ; puis pour transmettre la combinaison déchiffrée F+M du fichier F et du masque M à l'enclave client sécurisée 34.

L'algorithme de déchiffrement est configuré pour déchiffrer un élément chiffré via l'algorithme de chiffrement homomorphe et la clé de chiffrement, ceci grâce à la clé de déchiffrement.

La sortie du module de déchiffrement 32 correspond à la combinaison déchiffrée F+M du fichier F et du masque M, l'équipement client 14 n'a alors pas accès au fichier F seul en clair. Le masque M permet alors, pour le serveur informatique 12, de protéger la confidentialité du fichier F d'un équipement client dit « curieux ».

L'enclave client sécurisée 34 comprend une unité de démasquage 36 et une unité 38 de mise en oeuvre du fichier F.

L'enclave client sécurisée 34 est un environnement d'exécution sécurisée, ou TEE (de l'anglais *Trusted Execution Environment*). L'enclave client sécurisée 34 est par exemple choisie parmi le groupe consistant en : une enclave ARM@ TrustZone® et une enclave Intel@ Software Guard Extensions, également appelée Intel@ SGX.

L'enclave client sécurisée 34 est hébergée par l'équipement client 14 ; et le serveur informatique 12 communique avec l'enclave client sécurisée 34. Néanmoins, ni le serveur informatique 12, ni l'équipement client 14 n'ont accès au contenu de l'enclave client sécurisée 34.

L'unité de démasquage 36 est adaptée pour recevoir la combinaison F+M du fichier F et du masque M ; puis pour retirer le masque M pour la mise en oeuvre du fichier F au sein de l'enclave client sécurisée 34.

A cet effet, le module de masquage 24 est configuré en outre pour transmettre le masque M à l'unité de démasquage 36 qui est incluse dans l'enclave client sécurisée 34 de l'équipement client 14 correspondant au premier identifiant de la requête $Req_F$.

L'unité de démasquage 36 est adaptée pour fournir en sortie le fichier F en clair à l'unité de mise en oeuvre 38.

En d'autres termes, en ayant préalablement reçu le masque M, l'unité de démasquage 36 est configurée pour effectuer le calcul suivant :

[2]

$$(F + M) - M = F$$

L'unité de mise en oeuvre 38 est configurée pour exécuter le fichier F en clair, ce qui permet d'avoir de bonnes performances d'exécution et évite des échanges de données entre le serveur informatique 12 et l'équipement client 14.

Par exemple, l'unité de mise en oeuvre 38 est configurée pour recevoir un ensemble de données De de l'équipement client 14 ; puis pour exécuter le fichier F sur les données De ; et enfin pour transmettre le résultat F(Dc) à l'équipement client 14 hors de l'enclave client sécurisée 34.

Ainsi, le serveur informatique 12 ne reçoit pas les données De potentiellement confidentielles, et l'équipement client 14 n'a pas accès à la fonction F en clair, mais uniquement au résultat F(Dc) issu de l'enclave client sécurisée 34.

Par exemple, le fichier F est un algorithme d'intelligence artificielle, tel qu'un réseau de neurones fournissant à partir d'un ensemble de donnée d'entrée, une sortie comprenant des informations déterminées à partir des données d'entrée. Le système client-serveur 10 permet alors à l'équipement client 14 d'utiliser l'algorithme d'intelligence artificielle afin d'obtenir des informations à partir de ses données De, sans que le serveur informatique 12 n'ait accès aux données De. De plus, le serveur informatique 12 partage cet algorithme depuis sa base 20, sans lui-même risquer que l'équipement client 14 n'ait accès aux paramètres de l'algorithme.

En complément facultatif, afin de renforcer la confidentialité pour l'équipement client 14 et d'assurer au serveur informatique 12 que le fichier F est bien exécuté dans l'enclave client sécurisée 34, le système client-serveur 10 utilise des protocoles d'attestation, ou RA (de l'anglais *Remote Attestation*).

En complément facultatif encore, le système client-serveur 10 comprend des mécanismes de validation de l'intégrité du fichier F exécuté par l'unité de mise en oeuvre 38. Par exemple, le fichier F est signé par une autorité tierce, distincte de l'équipement client 14 et du serveur informatique 12, pour s'assurer de son intégrité et pour assurer à l'équipement client 14 que le fichier F ne contient pas une faille qui permettrait une fuite de données vers le serveur informatique 12. En variante, le fichier F est signé par le serveur informatique 12 lui-même, ceci pour assurer à l'équipement client 14 - en particulier à l'enclave client sécurisée 34 - que le fichier F reçu émane bien du serveur informatique 12 et qu'il n'a alors pas été corrompu par une entité malveillante, qui aurait été en mesure d'intercepter, puis de corrompre le fichier F lors de sa transmission du serveur informatique 12 vers l'enclave client sécurisée 34.

Dans l'exemple de la figure 1, le canal sécurisé 16 est configuré pour transmettre le masque M depuis le module de masquage 24 du serveur informatique 12 vers l'unité de démasquage 36, incluse dans l'enclave client sécurisée 34 de l'équipement client 14.

En variante, l'équipement client 14 a la possibilité de couper les communications entre le serveur informatique 12 et l'enclave client sécurisée 34.

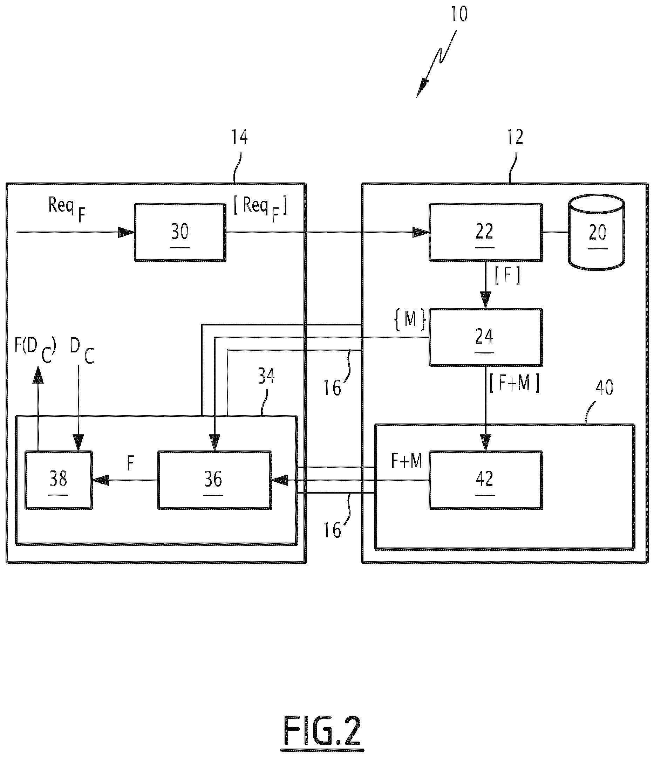

Un deuxième mode de réalisation du système client-serveur 10 selon l'invention va maintenant être décrit, en référence à la figure 2. Seules les différences entre le premier mode de réalisation décrit ci-dessus et le deuxième mode de réalisation sont décrites ci-après.

Dans l'exemple de la figure 2, le serveur informatique 12 comprend en outre une enclave serveur sécurisée 40.

L'enclave serveur sécurisée 40 est un environnement d'exécution sécurisé, ou TEE (de l'anglais *Trusted Execution Environment*). L'enclave serveur sécurisée 40 est par exemple choisie parmi le groupe consistant en : une enclave ARM@ TrustZone® et une enclave Intel@ Software Guard Extensions, également appelée Intel@ SGX.

L'enclave serveur sécurisée 40 comprend une unité de déchiffrement 42.

L'unité de déchiffrement 42 est configurée pour recevoir le chiffré [F+M] de la combinaison du fichier F et du masque M, fourni par le module de masquage 24.

L'unité de déchiffrement 42 est en outre configurée pour déchiffrer le chiffré [F+M] de la combinaison du fichier F et du masque M via l'algorithme de déchiffrement et la clé de déchiffrement. L'unité de déchiffrement 42 est ensuite configurée pour transmettre la combinaison déchiffrée F+M du fichier F et du masque M à l'enclave client sécurisée 34 correspondant au premier identifiant de la requête $Req_F$, en particulier à l'unité de démasquage 36, la clé de déchiffrement ayant été transmise préalablement à l'enclave serveur sécurisée 40.

L'enclave serveur sécurisée 40 permet de déchiffrer le chiffré [F+M] de la combinaison du fichier F et du masque M, sans que le serveur informatique 12 n'ait accès au fichier F, ce qui évite que le serveur informatique 12 puisse déterminer le deuxième identifiant de la requête $Req_F$ transmis de manière chiffrée par l'équipement client 14.

Le déchiffrement homomorphe dans l'enclave serveur sécurisée 40 permet de gagner de la bande passante lors de l'envoi de la combinaison F+M à l'enclave client sécurisée 34. En effet, l'envoi de la combinaison chiffrée [F+M] nécessite plus de bande passante que l'envoi de la combinaison déchiffrée F+M.

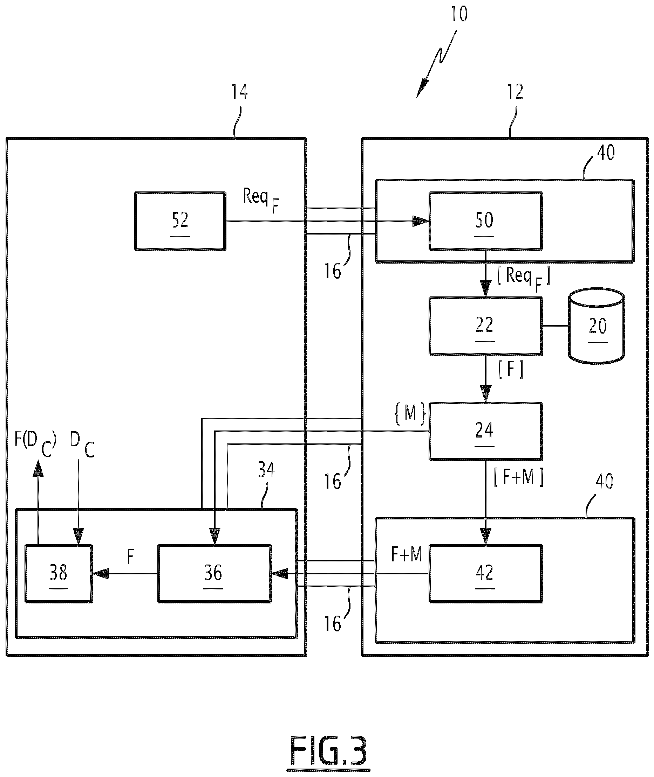

Un troisième mode de réalisation du système client-serveur 10 selon l'invention va maintenant être décrit, en référence à la figure 3. Seules les différences entre le deuxième mode de réalisation décrit ci-dessus et le troisième mode de réalisation sont décrites ci-après.

Dans l'exemple de la figure 3, l'enclave serveur sécurisée 40 comprend en outre une unité de chiffrement 50.

L'unité de chiffrement 50 est configurée pour recevoir la requête $Req_F$ en clair transmise par un module de transmission 52 inclus dans l'équipement client 14 ; puis pour chiffrer le deuxième identifiant inclus dans la requête $Req_F$ via l'algorithme de chiffrement homomorphe et la clé de chiffrement ; et enfin pour fournir au module de gestion 22 la requête chiffrée $[Req_F]$.

Le module de transmission 52 est réalisé sous forme d'un ou plusieurs logiciels, ou d'une brique logicielle, exécutables par le processeur. La mémoire de l'équipement client 14 est alors apte à stocker un logiciel de transmission. Le processeur de l'équipement client 14 est alors apte à exécuter le logiciel de transmission.

Ainsi, le chiffrement du deuxième identifiant inclus dans la requête $Req_F$ est effectué par le serveur informatique 12, et non plus par l'équipement client 14.

L'unité de chiffrement 50 étant incluse dans l'enclave serveur sécurisée 40, le serveur informatique 12 n'a pas accès à la requête Req$_F$ en clair.

De plus, la requête Req$_F$ est transmise depuis le module de transmission 52 inclus dans l'équipement client 14 vers l'unité de chiffrement 50 incluse dans le serveur informatique 12 via le canal sécurisé 16.

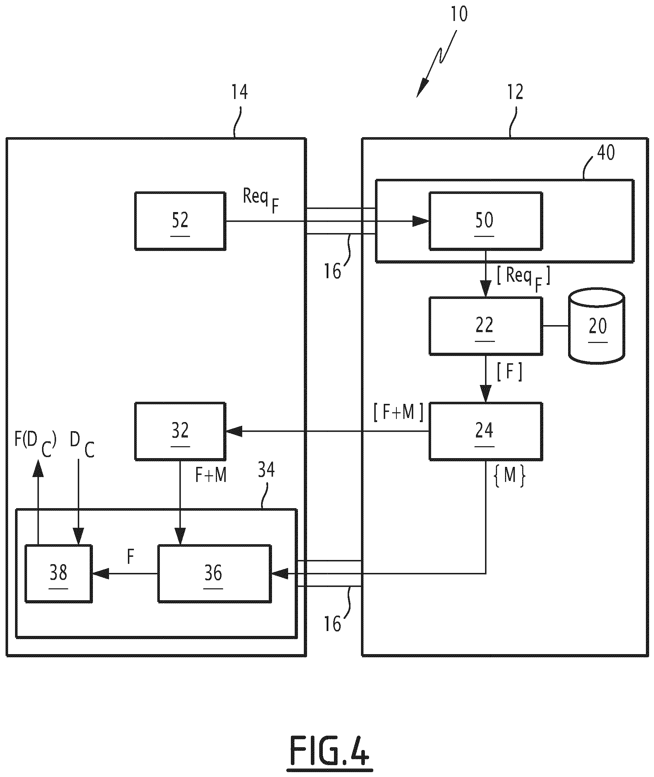

Selon un quatrième mode de réalisation du système client-serveur 10 selon l'invention, en référence à la figure 4, le système client-serveur 10 est configuré pour que le chiffrement homomorphe soit effectué par l'unité de chiffrement 50 incluse dans l'enclave serveur sécurisée 40 et pour que le déchiffrement homomorphe soit effectué par le module de déchiffrement 32 inclus dans l'équipement client 14.

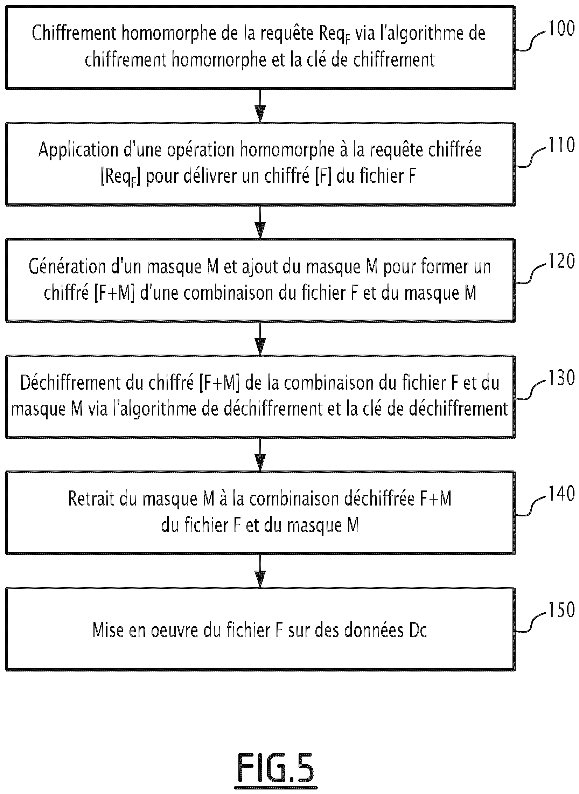

Un procédé d'échange de données entre le serveur informatique 12 et l'équipement client 14 selon l'invention va maintenant être décrit, en référence à la figure 5. Ce procédé est applicable à tous les modes de réalisation décrits ci-dessus.

Un tel procédé est par exemple mis en oeuvre pour la demande d'exécution d'un fichier F inclus dans le serveur informatique 12 par l'équipement client 14.

L'équipement client 14 souhaite avoir par exemple accès à un fichier F compris dans la base 20 du serveur informatique 12. L'équipement client 14 génère la requête Req$_F$ contenant le premier identifiant de l'équipement client 14 et le deuxième identifiant du fichier F parmi les fichiers de la base 20.

Le procédé permet par exemple à un utilisateur d'utiliser en local sur l'équipement client 14 des algorithmes d'intelligence artificielle, déjà entrainés et stockés sur le serveur informatique 12, sans que le serveur informatique 12 ne sache l'algorithme choisi par l'équipement client 14 et également sans que l'équipement client 14 n'ait accès au code de l'algorithme, et donc à ses paramètres.

Selon un autre exemple, le procédé permet à un utilisateur de faire tourner dans son navigateur Internet un jeu vidéo en ligne choisi parmi un ensemble de jeux stockés sur un serveur informatique 12, sans que le serveur informatique 12 n'ait accès au jeu choisi évitant ainsi par exemple la publicité ciblée pour l'équipement client 14, et aussi sans que l'équipement client 14 n'ait accès au code du jeu.

Dans une première étape 100, le deuxième identifiant inclus dans la requête Req$_F$ est chiffré via l'algorithme de chiffrement homomorphe et la clé de chiffrement.

Selon les premier et deuxième modes de réalisation, le chiffrement homomorphe est effectué par le module de chiffrement 30 inclus dans l'équipement client 14.

Selon les troisième et quatrième modes de réalisation, le chiffrement homomorphe est effectué par l'unité de chiffrement 50 incluse dans l'enclave serveur sécurisée 40, elle-même comprise dans le serveur informatique 12. Dans ce cas, la requête Req$_F$ est transmise à l'unité de chiffrement 50 par le module de transmission 52 inclus dans l'équipement client 14. De préférence, la transmission de la requête Req$_F$ entre le module de transmission 52 et l'enclave serveur sécurisée 40 est effectuée via le canal sécurisé 16.

La requête chiffrée [Req$_F$] est ensuite transmise au module de gestion 22.

Dans une seconde étape 110, le module de gestion 22 applique l'opération homomorphe à la requête chiffrée [Req$_F$] afin de délivrer le chiffré [F] du fichier F. Le chiffré [F] correspond au fichier F chiffré via l'algorithme de chiffrement et la clé de chiffrement.

Le fichier chiffré [F] est ensuite transmis au module de masquage 24.

Dans une troisième étape 120, le module de masquage 24 génère aléatoirement le masque M et ajoute le masque M au fichier chiffré [F] afin de former le chiffré [F+M] de la combinaison du fichier F et du masque M.

En outre, le module de masquage 24 transmet le masque M à l'enclave client sécurisée 34 incluse dans l'équipement client 14. De préférence, la transmission du masque M est effectuée via le canal sécurisé 16. Autrement dit, la transmission du masque M est effectuée directement jusqu'à l'enclave client sécurisée 34 via le canal sécurisé 16, sans que l'équipement client 14 ne puisse alors avoir accès au masque M.

En variante, lorsque le masque M n'est pas transmis via le canal sécurisé à l'enclave client sécurisée 34, le masque M est avantageusement transmis de manière chiffrée à l'enclave client sécurisée 34, cette transmission chiffrée étant également pour empêcher l'accès au masque M par l'équipement client 14. La transmission chiffrée de M ne nécessite pas nécessairement un chiffrement homomorphe.

Dans une quatrième étape 130, le chiffré [F+M] de la combinaison du fichier F et du masque M est déchiffré via l'algorithme de déchiffrement et la clé de déchiffrement.

Selon les premier et quatrième modes de réalisation, le module de masquage 24 transmet la combinaison chiffrée [F+M] au module de déchiffrement 32 inclus dans l'équipement client 14. Le module de déchiffrement 32 déchiffre alors la combinaison chiffrée [F+M], puis transmet la combinaison déchiffrée F+M du fichier F et du masque M à l'unité de démasquage 36 de l'enclave client sécurisée 34.

Selon les deuxième et troisième modes de réalisation, le module de masquage 24 transmet la combinaison chiffrée [F+M] à l'unité de déchiffrement 42 incluse dans l'enclave serveur sécurisée 40. L'unité de déchiffrement 42 déchiffre alors la combinaison chiffrée [F+M], puis transmet la combinaison déchiffrée F+M du fichier F et du masque M à l'unité de démasquage 36 de l'enclave client sécurisée 34. De préférence, la transmission est effectuée via le canal sécurisé 16.

Dans une cinquième étape 140, l'unité de démasquage 36 retire le masque M à la combinaison F+M, afin de transmettre le fichier F exécutable en clair à l'unité de mise en oeuvre 38 incluse dans l'enclave client sécurisée 34.

Dans une sixième et dernière étape 150, l'unité de mise en oeuvre 38 prend en entrée des données De depuis l'équipement client 14, exécute le fichier F sur les données De et renvoie le résultat F(Dc) de l'exécution à l'équipement client 14.

Grâce aux caractéristiques précédemment décrites, le serveur informatique 12 partage alors le fichier F avec l'équipement client 14 qui l'exécute sur des données De au sein de l'enclave client sécurisée 34, et l'équipement client 14 envoie uniquement la requête $Req_F$ d'accès au fichier F au serveur informatique 12, et ce de manière sécurisée, notamment afin que le serveur informatique 12 n'ait pas connaissance de l'identité du fichier F souhaité.

Contrairement à l'état de la technique où l'équipement client 14 envoie les données De chiffrées au serveur informatique 12 et le serveur informatique 12 exécute le fichier F sur les données chiffrées De, pour renvoyer ensuite à l'équipement client le résultat F(Dc) chiffré, l'exécution étant alors particulièrement longue ; le serveur informatique 12 selon l'invention traite seulement la requête chiffrée $[Req_F]$ en chiffré, ce qui améliore grandement les performances du serveur informatique 12, tout en assurant la confidentialité expliquée précédemment, tant pour le serveur informatique 12 que pour l'équipement client 14.

L'échange de données effectué entre le serveur informatique 12 et l'équipement client 14 peut être alors qualifié de « double aveugle », le serveur informatique 12 n'ayant pas connaissance du contenu de la requête $Req_F$ de l'équipement client 14, et l'équipement client 14 n'ayant ensuite pas connaissance du contenu du fichier F renvoyé par le serveur informatique 12 en réponse à cette requête.

## Revendications

1. Serveur informatique (12) comprenant :

   - une base (20) de fichiers informatiques ;
   - un module de gestion (22) configuré pour recevoir une requête ($[Req_F]$) contenant un premier identifiant d'un équipement client (14) et un deuxième identifiant d'un fichier (F) parmi les fichiers de la base (20), le deuxième identifiant inclus dans la requête ($[Req_F]$) ayant été chiffré via un algorithme de chiffrement homomorphe et une clé de chiffrement ; le module de gestion (22) étant alors configuré pour appliquer une opération homomorphe à la requête ($[Req_F]$) pour délivrer un chiffré ($[F]$) du fichier (F) correspondant au deuxième identifiant, le chiffré du fichier étant selon l'algorithme de chiffrement homomorphe et la clé de chiffrement ;
   - un module de masquage (24) connecté en sortie du module de gestion (22), le module de masquage (24) étant configuré pour recevoir le chiffré ($[F]$) du fichier (F), pour générer un masque (M) et pour délivrer un chiffré ($[F+M]$) d'une combinaison du fichier (F) et du masque (M) ;

   le module de masquage (24) étant configuré en outre pour transmettre le masque (M) à une enclave client sécurisée (34) incluse dans l'équipement client (14) correspondant au premier identifiant, l'enclave client sécurisée (34) étant alors adaptée pour recevoir la combinaison du fichier (F) et du masque (M), puis pour retirer le masque (M) pour la mise en oeuvre du fichier (F) au sein de l'enclave client sécurisée (34).

2. Serveur informatique (12) selon la revendication 1, dans lequel la requête chiffrée ($[Req_F]$) est reçue d'un module de chiffrement (30) inclus dans l'équipement client (14), le module de chiffrement (30) étant configuré pour chiffrer le deuxième identifiant inclus dans la requête ($Req_F$) via l'algorithme de chiffrement homomorphe et la clé de chiffrement.

3. Serveur informatique (12) selon la revendication 1, dans lequel le serveur informatique (12) comprend en outre une enclave serveur sécurisée (40), l'enclave serveur sécurisée (40) comprenant une unité de chiffrement (50), l'unité de chiffrement (50) étant configurée pour recevoir la requête ($Req_F$) d'un module de transmission (52) inclus dans l'équipement client (14), pour chiffrer le deuxième identifiant inclus dans la requête ($Req_F$) via l'algorithme de chiffrement homomorphe et la clé de chiffrement, et pour fournir au module de gestion (22) la requête chiffrée ($[Req_F]$).

4. Serveur informatique (12) selon l'une quelconque des revendications précédentes, dans lequel le module de masquage (24) est configuré pour transmettre le chiffré ($[F+M]$) de la combinaison du fichier (F) et du masque (M) à un module de déchiffrement (32) inclus dans l'équipement client (14), le module de déchiffrement (32) étant configuré pour déchiffrer le chiffré ($[F+M]$) de la combinaison du fichier (F) et du masque (M) via un algorithme de déchiffrement et une clé de déchiffrement et pour transmettre la combinaison déchiffrée (F+M) du fichier (F) et du masque (M) à l'enclave client sécurisée (34).

5. Serveur informatique (12) selon l'une quelconque des revendications 1 à 3, dans lequel le serveur informatique (12) comprend en outre une enclave serveur sécurisée (40), l'enclave serveur sécurisée (40) comprenant une unité de déchiffrement (42), l'unité de déchiffrement (42) étant configurée pour déchiffrer le chiffré ([F+M]) de la combinaison du fichier (F) et du masque (M) via un algorithme de déchiffrement et une clé de déchiffrement et pour transmettre la combinaison déchiffrée (F+M) du fichier (F) et du masque (M) à l'enclave client sécurisée (34).

6. Serveur informatique (12) selon l'une quelconque des revendications précédentes, dans lequel la ou chaque enclave sécurisée (34, 40) est choisie parmi le groupe consistant en : une enclave ARM@ TrustZone® et une enclave Intel@ Software Guard Extensions.

7. Serveur informatique (12) selon l'une quelconque des revendications précédentes, dans lequel le masque (M) est généré aléatoirement ou pseudo-aléatoirement et est à usage unique ;
le masque (M) étant de préférence généré via une méthode de masque jetable ou via une fonction pseudo-aléatoire.

8. Serveur informatique (12) selon l'une quelconque des revendications précédentes, dans lequel l'algorithme de chiffrement homomorphe est un algorithme de chiffrement homomorphe additif.

9. Serveur informatique (12) selon l'une quelconque des revendications précédentes, dans lequel le deuxième identifiant de la requête chiffrée ([Req$_F$]) est un vecteur de chiffrés, la taille du vecteur étant égale au nombre de fichiers informatiques de la base (20).

10. Serveur informatique (12) selon la revendication 9, dans lequel l'opération homomorphe appliquée à la requête chiffrée ([Req$_F$]) est un produit scalaire.

11. Système client-serveur (10) comprenant un équipement client (14) et un serveur informatique (12) reliés entre eux, **caractérisé en ce que** le serveur informatique (12) est selon l'une quelconque des revendications précédentes.

12. Système client-serveur (10) selon la revendication 11, comprenant au moins un canal sécurisé (16) configuré pour transmettre une information entre l'équipement client (14) et le serveur informatique (12).

13. Procédé d'échange de données entre un serveur informatique (12) et un équipement client (14), le serveur informatique (12) comprenant une base (20) de fichiers informatiques, le procédé comprenant les étapes suivantes :

- chiffrement homomorphe (100) d'une requête ([Req$_F$]) via un algorithme de chiffrement homomorphe et une clé de chiffrement, la requête (Req$_F$) contenant un premier identifiant de l'équipement client (14) et un deuxième identifiant d'un fichier (F) parmi les fichiers de la base (20), seul le deuxième identifiant étant chiffré ;
- application (110) d'une opération homomorphe à la requête chiffrée ([Req$_F$]) pour délivrer un chiffré ([F]) du fichier (F) correspondant au deuxième identifiant ;
- génération (120) d'un masque (M) et ajout du masque (M) au chiffré ([F]) du fichier (F) pour former un chiffré ([F+M]) d'une combinaison du fichier (F) et du masque (M) ;
- déchiffrement (130) du chiffré ([F+M]) de la combinaison du fichier (F) et du masque (M) via un algorithme de déchiffrement et une clé de déchiffrement ;
- retrait (140) du masque (M) à la combinaison déchiffrée (F+M) du fichier (F) et du masque (M) dans une enclave client sécurisée (34) incluse dans l'équipement client (14) correspondant au premier identifiant ;
- mise en oeuvre (150) du fichier (F) dans l'enclave client sécurisée (34).

$$\text{FIG.1}$$

FIG.2

**FIG.3**

FIG.4

Chiffrement homomorphe de la requête Req$_F$ via l'algorithme de chiffrement homomorphe et la clé de chiffrement ⌒100

Application d'une opération homomorphe à la requête chiffrée [Req$_F$] pour délivrer un chiffré [F] du fichier F ⌒110

Génération d'un masque M et ajout du masque M pour former un chiffré [F+M] d'une combinaison du fichier F et du masque M ⌒120

Déchiffrement du chiffré [F+M] de la combinaison du fichier F et du masque M via l'algorithme de déchiffrement et la clé de déchiffrement ⌒130

Retrait du masque M à la combinaison déchiffrée F+M du fichier F et du masque M ⌒140

Mise en oeuvre du fichier F sur des données Dc ⌒150

## FIG.5

Europäisches Patentamt

European Patent Office

Office européen des brevets

# RAPPORT DE RECHERCHE EUROPEENNE

Numéro de la demande

EP 24 22 0270

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 262 141 A1 (COMMISSARIAT ENERGIE ATOMIQUE [FR]) 18 octobre 2023 (2023-10-18) * alinéas [0046] - [0049], [0061] - [0064]; figures 1,3 * | 1-13 | INV. H04L9/00 H04L9/06 H04L9/08 H04L9/14 |
| A | AVGERINOS NIKOS ET AL: "A Practical and Scalable Privacy-preserving Framework", 2023 IEEE INTERNATIONAL CONFERENCE ON CYBER SECURITY AND RESILIENCE (CSR), IEEE, 31 juillet 2023 (2023-07-31), pages 598-603, XP034411403, DOI: 10.1109/CSR57506.2023.10224928 * section VI-A * | 1-13 | |
| A | Wenhao Wang ET AL: "Toward Scalable Fully Homomorphic Encryption Through Light Trusted Computing Assistance", arXiv preprint arXiv: 1905.07766, 19 mai 2019 (2019-05-19), pages 1-12, XP055767196, Extrait de l'Internet: URL:https://arxiv.org/pdf/1905.07766.pdf [extrait le 2021-01-20] * le document en entier * | 1-13 | **DOMAINES TECHNIQUES RECHERCHES (IPC)** H04L |

Le présent rapport a été établi pour toutes les revendications

| Lieu de la recherche | Date d'achèvement de la recherche | Examinateur |
|---|---|---|
| Munich | 2 avril 2025 | Yamajako-Anzala, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 24 22 0270

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-04-2025

| Document brevet cité au rapport de recherche | Date de publication | Membre(s) de la famille de brevet(s) | Date de publication |
|---|---|---|---|
| EP 4262141 A1 | 18-10-2023 | EP 4262141 A1 | 18-10-2023 |
| | | FR 3134672 A1 | 20-10-2023 |
| | | US 2024054136 A1 | 15-02-2024 |

EPO FORM P0460

## EP 4 576 649 A1

**Littérature non-brevet citée dans la description**

- **W. WANG**. *Toward Scalable Fully Homomorphic Encryption Through Light Trusted Computing Assistance*